# EUROPÄISCHE PATENTSCHRIFT

(11) **EP 3 512 695 B1**
(45) Veröffentlichungstag und Bekanntmachung des Hinweises auf die Patenterteilung: **06.03.2024**
(21) Anmeldenummer: 18700907.1
(22) Anmeldetag: 18.01.2018
(51) Int. Cl.: B30B 1/40, B21D 19/08

(54) **KEILTRIEB UND VERFAHREN ZUM HERSTELLEN EINES KEILTRIEBS MIT OPTIMIERTER FÜHRUNG**
WEDGE DRIVE AND METHOD FOR PRODUCING A WEDGE DRIVE HAVING OPTIMIZED GUIDANCE
TRANSMISSION PAR COURROIE TRAPÉZOÏDALE ET PROCÉDÉ DE PRODUCTION D'UNE TRANSMISSION PAR COURROIE TRAPÉZOÏDALE À GUIDAGE OPTIMISÉ

(30) Priorität: 22.02.2017 DE 202017100989 U; 25.07.2017 DE 102017116794
(43) Veröffentlichungstag der Anmeldung: 24.07.2019
(73) Patentinhaber: Fibro GmbH, 74855 Hassmersheim (DE)
(72) Erfinder: MEYER, Markus, 88239 Wangen im Allgäu (DE)
(74) Vertreter: Staeger & Sperling Partnerschaftsgesellschaft mbB
(86) Internationale Anmeldenummer: PCT/EP2018/051167
(87) Internationale Veröffentlichungsnummer: WO 2018/153578

(56) Entgegenhaltungen:
- WO-A1-2015/132355
- DE-A1-102012 014 546
- DE-U1-202015 106 966
- US-A1- 2009 078 067
- US-A1- 2017 014 888
- US-A1- 2017 014 890

## Beschreibung

Die vorliegende Erfindung betrifft einen Keiltrieb sowie Verfahren zur Herstellung eines Keiltriebs zur Umlenkung einer vertikalen Pressenkraft in eine horizontale, vorzugsweise lineare Arbeitsbewegung gemäß Ansprüchen 1 und 11.

Keiltriebe werden typischerweise in Werkzeugen bei Umformprozessen eingesetzt, in denen Bauteile oder Materialien unter hohem Kraftaufwand umgeformt werden müssen und dabei eine hohe Präzision erforderlich ist.

Keiltriebe werden z. B. in der Automobilindustrie zur Fertigung von Karosseriebauteilen eingesetzt, insbesondere zur Bearbeitung von großen Blechteilen, beim Zuschnitt, dem Stanzen oder Lochen oder beim Verformen von solchen Blechteilen. Die dabei auftretenden Kräfte erreichen auch Werte deutlich oberhalb von 1000 kN. Eine grundsätzliche Herausforderung besteht bei Keiltrieben darin, dass die Führungen insbesondere die Umsetzung in eine Linearbewegung auch tatsächlich gemäß dem gewünschten präzisen Bewegungsprofil erfolgt.

Gattungsgemäße Keiltriebe sind so ausgebildet, dass diese Führungselemente, Gleitleisten, ein Treiberelement, ein Schieberelement sowie eine positionsfeste Schieberelementaufnahme umfassen, wobei die vertikale Presskraft von der Schieberelementaufnahme aufgenommen wird.

Die Treiberführung dient einer linearen Führung des Schieberelements entlang des Treiberelements. Die Führungseinrichtung dient der linearen Führung des Schieberelements entlang der Schieberelementaufnahme in einer Gleitrichtung.

In einer Presse wird die Schieberelementaufnahme, die mit dem beweglichen Pressenelement verbunden ist, in vertikaler Richtung bewegt, wohingegen das Treiberelement positionsfest ist. Durch die Relativbewegung wird eine lineare Bewegung erzeugt. Diese Bewegung soll aber auch bei hohen Kräften möglichst exakt sein, vor allen Dingen, wenn Querkräfte auf den Keiltrieb wirken.

In der DE 20 2015 106 966 U1 ist ein Keiltrieb gemäß dem Oberbegriff des Anspruchs 1 offenbart, in dieser Druckschrift ist auch beschrieben, dass eine solche Belastung regelmäßig dann auftritt, wenn der Keiltrieb zum Umformen von Bauteilen während des Umformprozesses auf eine gekrümmte Fläche des Bauteils auftrifft und dadurch quer zur linearen Arbeitsbewegung auftretende Kräfte durch den Keiltrieb aufgenommen werden müssen, wobei die kritischen Faktoren die Schieberelementaufnahme und das Schieberelement darstellen.

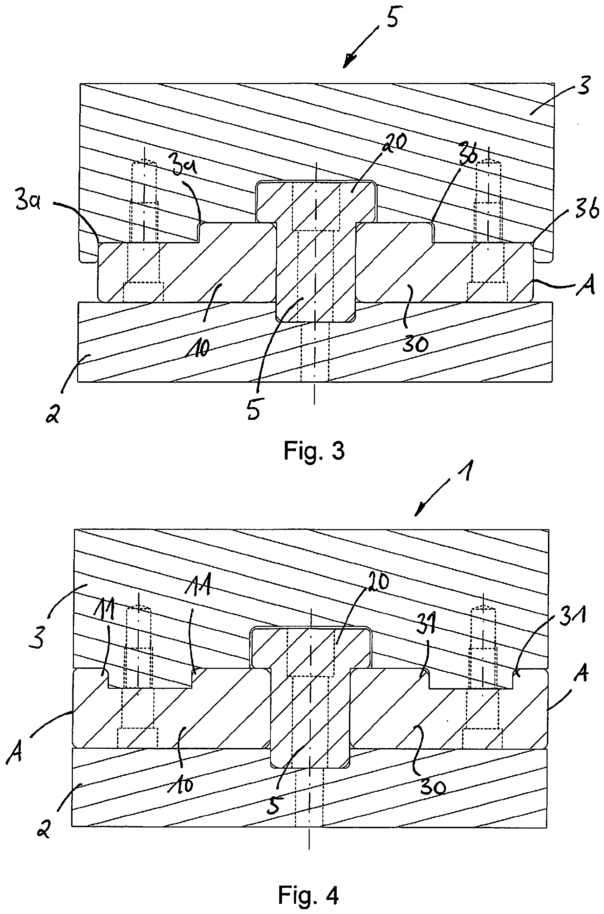

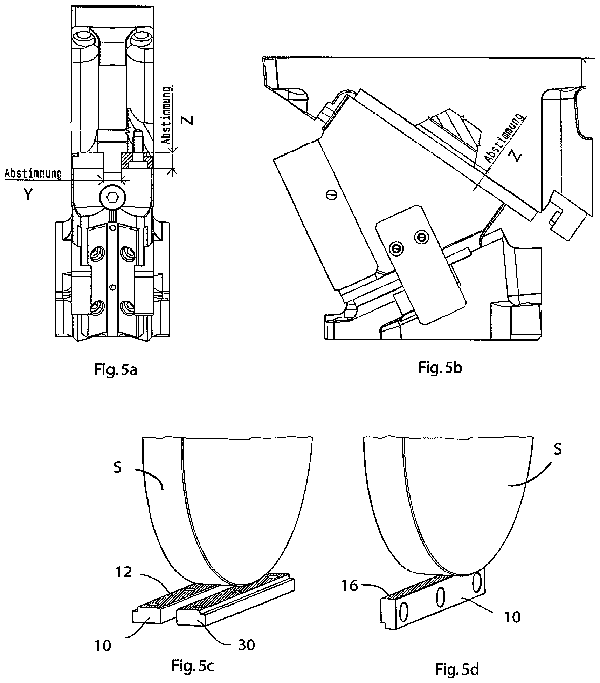

Problematisch ist bei der dort gezeigten Lösung die Abstimmung des Führungsspiels zwischen den beiden Gleitleisten und dem zentralen T-Block. Grundsätzlich ist das Einschleifen der Bauteilhöhe der Gleitleisten für die Schieber-Bauhöhe nachteilig, da dort eben eine Primärfläche durch Umfansgschleifen eingeschliffen wird. Hierzu wird exemplarisch auf die Figur 4 der DE 20 2015 106 966 U1 verwiesen und die Beschreibung der Abstimmung zum exakten Einpassen der Gleitleisten in den Figuren 5a bis 5d in der Figurenbeschreibung. Da das System nicht "überbestimmt" eingeschliffen werden kann, bedarf es bei der gezeigten Ausführung der Abstimmung der Höhe und der Breite der Gleitleisten.

In der genannten DE 20 2015 106 966 U1 wird eine Lösung vorgeschlagen, um die Führungseinrichtung so auszugestalten, dass sie eine hinreichend präzise Führung gewährleistet, wobei eine Befestigung einer Seitengleitplatte an einer bestimmten Anlagefläche vorsieht, mit der diese gegen das Führungselement gedrückt wird. Die Gleitleisten sind als quaderförmige Leisten mit einer winkligen Eckausnehmung über die Länge der Gleitleisten ausgebildet, wobei das Anpassen der Höhe der Gleitleisten das Schleifen der Primärflächen der Leisten zu Folge hat. Dies wiederum hat aber einen nachteiligen Einfluss auf die Abstimmung der gesamten Bauhöhe des Schiebers.

Ein weiterer Keilschieber, bei welchem zusätzliche individuell anpassbare Gleitplatten vorgesehen sind, ist aus der US 2009/078 067 A1 bekannt.

Es ist daher Aufgabe der vorliegenden Erfindung eine alternative Lösung vorzusehen, mit der die Querkräfte optimiert abgefangen bzw. aufgenommen werden können und bei der die Herstellung und Anpassung der Gleitleisten einfach und kostengünstig möglich ist.

Diese Aufgabe wird durch die Merkmalskombination gemäß Anspruch 1 gelöst.

Der Grundgedanke der vorliegenden Erfindung liegt darin, eine spezifische Gleitplattenformation vorzusehen. Ein weiterer Aspekt betrifft das Einstellen des Führungsspiels zwischen den Seitengleitplatten und der Mittenführung der vorgeschlagenen Gleitplattenformation bei der Herstellung oder Montage eines Keiltriebs.

Zwischen dem Treiberelement und Schieberelementaufnahme ist das Schieberelement angeordnet. Das Schieberelement und die Schieberelementaufnahme stellen zwei Führungselemente dar, an denen eine Führungseinrichtung mit einer Gleitplattenanordnung mit zwei Seitengleitplatten und einer Mittenführung angeordnet ist.

Die Seitengleitplatten sind an einem der beiden Führungselemente (Schieberelement oder Schieberelementaufnahme) befestigt und in einer Querrichtung, die senkrecht auf der Gleitrichtung steht, zueinander beabstandet. Die Mittenführung ist zwischen den beiden Seitengleitplatten angeordnet.

Erfindungsgemäß ist nun eine wenigstens einmal geschulterte Ausgestaltung der Seitengleitplatten vorgesehen. Eine korrespondierende Stufe ist in der Anlagefläche am entsprechenden Führungselement vorgesehen, so dass wenigstens zwei in der Querrichtung voneinander beabstandete Stufen im Führungselement vorgesehen sind.

Die beiden Seitengleitplatten liegen an jeweils einer der beiden Stufen mit ihrer Schulter formschlüssig an, wobei der Formschluss entweder in oder entgegen der definierten Querrichtung wirkt.

Erfindungsgemäß ist somit ein Keiltrieb gemäß den Merkmalen des Anspruchs 1 vorgesehen, der ausgebildet ist zur Umlenkung einer vertikalen Pressenkraft in eine horizontale, lineare Arbeitsbewegung, mit einem Schieberelement und einer Schieberelementaufnahme, welche zwei Führungselemente darstellen, an denen eine Führungseinrichtung mit einer Gleitplattenanordnung mit zwei Seitengleitplatten und einer Mittenführung angeordnet ist, wobei die Seitengleitplatten in einer Querrichtung Y, die senkrecht auf der Gleitrichtung X steht, zueinander beabstandet sind, wobei die Mittenführung zwischen den beiden Seitengleitplatten angeordnet und an dem Schieberelement befestigt ist, wobei die beiden Seitengleitplatten mit wenigstens einer Schulter ausgebildet sind, die an einer korrespondierenden Stufe ausgebildet am Führungselement mit Formschluss anliegen, wobei der Formschluss in bzw. entgegen der definierten Querrichtung wirkt, so dass Querkräfte abgefangen werden und jede Seitengleitplatte mit wenigstens den folgenden Anlageflächen an der Schieberelementaufnahme anliegt:
a. je eine Anlagefläche liegt auf einer ersten Ebene E1 und verläuft in Querrichtung Y und
b. eine Seitenfläche verläuft jeweils senkrecht dazu und liegt der Anlagefläche der Mittenführung vorzugsweise unter Bildung eines definierten Spaltes gegenüber.

Eine Anlagefläche der Seitengleitplatte liegt auf einer ersten Ebene und verläuft in Querrichtung. Eine zweite Fläche liegt auf einer Ebene E2, zur ersten Ebene E1 beabstandeten Ebene und verläuft ebenfalls in Querrichtung.

Besonders vorteilhaft ist es, wenn die Anlagefläche in Querrichtung betrachtet gleich oder größer ausgebildet ist im Vergleich zur höher liegenden Fläche der Seitengleitplatte.

Die Seitengleitplatte ist über Befestigungsmittel mit der ersten Anlagefläche gegen das entsprechende Führungselement in Formschluss befestigt.

Eine weitere Anlagefläche ist als Übergang zwischen der Anlagefläche und der höher liegenden Fläche und zwar senkrecht oder schräg zu diesen verlaufend ausgebildet. Bei einer schräg verlaufenden Anlagenfläche kann diese mit positiver oder negativer Neigung im Winkel von etwa 70° oder 110° +/- jeweils 10° angebracht sein.

Alternativ kann der Übergang von der Ebene E1, d. h. der Anlagefläche zur höheren Fläche (Ebene E2) eine rechtwinklige Schulter bzw. Stufe ausbilden.

Mit Vorteil ist die Ecke der Stufe und/oder Schulter gerundet bzw. mit einem Radius versehen.

Mit Vorteil ist eine zusätzliche zweite gegenläufige oder gleichläufige Stufe und Schulter in den jeweiligen Seitengleitplatten und dem korrespondierenden Führungselement ausgebildet. Der Formschluss wird mit Vorteil jedoch nur zwischen den Seitengleitplatten und einer senkrecht zur Querrichtung verlaufenden Anlagefläche zwischen der jeweiligen Seitengleitplatte und dem korrespondierenden Führungselement hergestellt, um den Versuch einer Doppelpassung zu vermeiden.

Die weitere Alternative ist die Ausbildung einer gegenläufigen Stufe, so dass zwei Anlageflächen auf einer gemeinsamen Ebene liegen und dazwischen eine Anlagefläche auf einer abgestuften Ebene vorgesehen ist, so dass ein Umgriff der beiden Stufen von korrespondierenden Schultern erfolgt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
Fig. 1 ein erstes Ausführungsbeispiel eines Keiltriebs;
Fig. 2 ein zweites Ausführungsbeispiel eines Keiltriebs;,
Fig. 3 ein drittes Ausführungsbeispiel eines Keiltriebs und
Fig. 4 ein viertes Ausführungsbeispiel eines Keiltriebs.
Figuren 5a, 5b, 5c und 5d eine Darstellung der Anpassung einer Gleitplattenformation bei einer herkömmlichen Lösung und
Figuren 6a, 6b, 6c und 6d eine Darstellung der Anpassung einer Gleitplattenformation bei der erfindungsgemäßen Lösung.

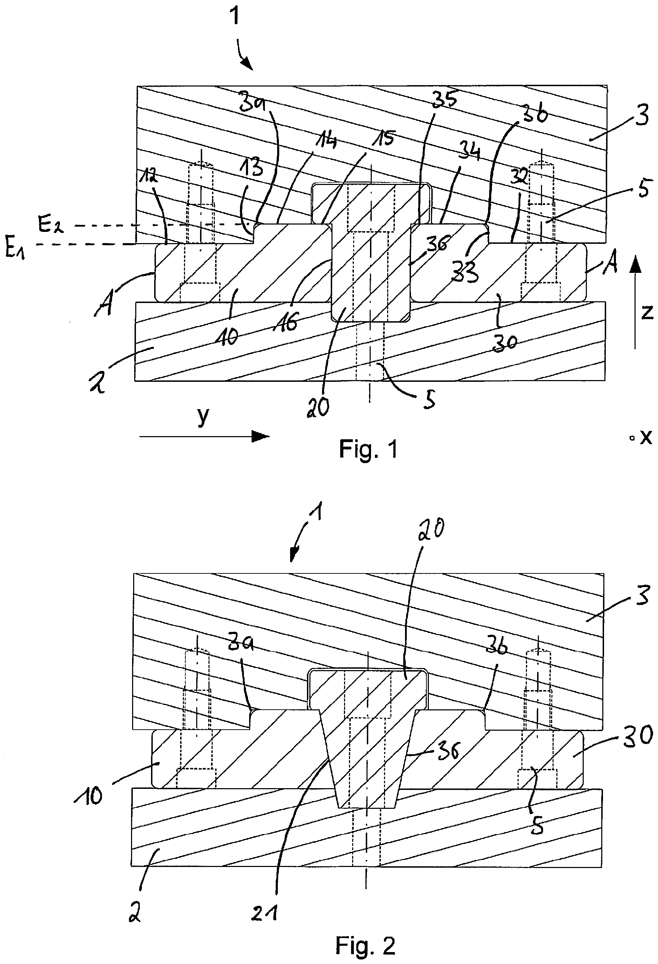

Im Folgenden wird die Erfindung mit Bezug auf die Figuren 1 bis 6d näher erläutert, wobei gleiche Bezugszeichen auf gleiche strukturelle und/oder funktionale Merkmale hinweisen.

In den Figuren 1 bis 4 sind unterschiedliche Ausführungsformen eines beispielhaften Keiltriebs gezeigt.

Der Keiltrieb 1 ist ausgebildet zur Umlenkung einer vertikalen Pressenkraft in eine horizontale, lineare Arbeitsbewegung und mit einem Schieberelement 2, einem Treiberelement (das nicht dargestellt ist) und einer Schieberelementaufnahme 3. Das Treiberelement ist an dem Schieberelement 2 in herkömmlicher Weise angeordnet.

Zwischen dem Treiberelement und der Schieberelementaufnahme 3 ist somit das gezeigte Schieberelement 2 angeordnet. Das Schieberelement 2 und die Schieberelementaufnahme 3 stellen zwei Führungselemente 2, 3 dar, an denen eine Führungseinrichtung mit einer Gleitplattenanordnung 10, 20, 30 mit zwei Seitengleitplatten 10, 30 und einer Mittenführung 20 angeordnet ist.

Die Seitengleitplatten 10, 30 sind an der Schieberelementaufnahme 3 mittels Befestigungsmitteln 5 befestigt und in einer Querrichtung Y, die senkrecht auf der Gleitrichtung X steht, zueinander beabstandet. Die Mittenführung 20 ist zwischen den beiden Seitengleitplatten 10, 30 angeordnet und mittels eines Befestigungsmittels 5 an dem Schieberelement 2 befestigt.

Die beiden Seitengleitplatten 10, 30 sind mit einer Schulter 11, 31 ausgebildet. Eine korrespondierende Stufe 3a, 3b ist in der Anlagefläche am entsprechenden Führungselement 3 vorgesehen, so dass zwei in der Querrichtung Y voneinander beabstandete Stufen im Führungselement vorgesehen sind.

Die beiden Seitengleitplatten 10, 30 liegen an jeweils einer der beiden Stufen 3a, 3b mit ihrer Schulter 11, 31 formschlüssig an, wobei der Formschluss in bzw. entgegen der definierten Querrichtung Y wirkt, so dass Querkräfte abgefangen werden.

Jede Seitengleitplatte 10, 30 verfügt über die Flächen 12, 13, 14, bzw. 32, 33, 34.

Die erste (außen liegende) Fläche 12 ist eine Anlagefläche 12 der Seitengleitplatte 10 bzw. die erste (außen liegende) Fläche 32 ist eine Anlagefläche 32 der Seitengleitplatte 30. Die Anlageflächen 12, 32 liegen auf einer ersten Ebene E1 und verlaufen in Querrichtung Y. Die Fläche 14 bzw. 34 liegt auf einer zweiten zur ersten Ebene beabstandeten Ebene E2 und verläuft ebenfalls in Querrichtung Y. Die dritte Fläche 13 bzw. 33 verläuft senkrecht dazu.

Die Fläche der Seitengleitplatten 10, 30, welche die jeweils zur Mittelführung 20 zugewandte Seitenfläche 14, 34 ausbildet, bildet auch eine Fläche 15, 35 aus, um ggf. gegen eine korrespondierende Anlagenfläche der Mittenführung 20 anzuliegen, welche ebenfalls in oder bei der Ebene E2 verläuft.

Die Anlagefläche 12, 32 in der Ebene E1 ist in Querrichtung Y betrachtet etwas größer d.h. breiter ausgebildet im Vergleich zur Fläche 14, 34 in der Ebene E2 der Seitengleitplatte. Die Anlagefläche 12, 32 erstreckt sich jeweils von der Außenkante A der Seitengleitplatte 10, 30 bis zur senkrechten Seitenfläche 13 bzw. 33. Die Fläche 14, 34 erstreckt sich jeweils von der Seitenfläche 13 bzw. 33 in Richtung zur Mittenführung 20 bis zur Seitenfläche 15 bzw. 35.

Die weitere Fläche 13, 33 ist jeweils als Übergang zwischen der ersten und zweiten Fläche 12, 14 bzw. 32, 34 und zwar senkrecht zu diesen verlaufend ausgebildet.

Somit stellt der Übergang von der ersten über die zweite zur dritten Anlagefläche eine Schulter bzw. Stufe dar.

In der Figur 3 ist für jede Seitengleitplatte 10, 30 eine weitere Stufe 3a, 3b an Schieberelementaufnahme 3 vorgesehen. In der Figur 4 weist jede Seitengleitplatte 10, 30 eine weitere Schulter 11, 31 auf, die in Formschluss gegen eine gegenüber der anderen Schulter gegenläufig ausgebildete Stufe der Schieberelementaufnahme 3 anliegt. Die sattelartig zwischen den beiden Schultern liegende Anlagefläche 12, 32 ist mit einem Befestigungsmittel 5 und zwar einer Schraube 5 an der Schieberelementaufnahme 3 befestigt.

In den Figuren 5a, 5b, 5c und 5d ist eine Darstellung der Anpassung einer Gleitplattenformation bei einer herkömmlichen Lösung gezeigt.

In der Fig. 5a ist eine teilgeschnittene Ansicht gezeigt, bei der die Abstimmung in Richtung Z und in Richtung Y dargestellt sind, was zum Einstellen des Führungsspiels zwischen den Seitengleitplatten und der Mittenführung notwendig ist.

Die Abstimmung, erfolgt hier, wie in den Figuren 5c und 5d, wobei sowohl ein Einschleifen mit Hilfe von Schleifkörpern S durch günstiges Umfangsschleifen erfolgt, was fertigungstechnische Vorteile mit sich bringt. Dieses Einschleifen wirkt sich unmittelbar in der Höhe der Seitengleitplatten 10, 30 insgesamt aus, wobei diese Anpassung im Bereich der Befestigungsabschnitte, somit der Primärfläche der Seitengleitplatten 10, 30 erfolgt. Dies wirkt sich allerdings auf die Bauhöhe des Keiltriebs insgesamt aus, da hierdurch das Abstandsmaß über die Seitengleitplatten im Gesamten verändert wird.

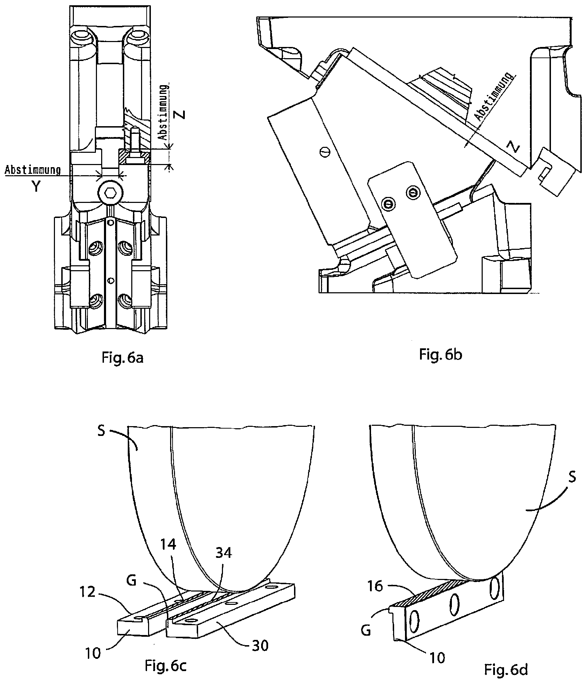

Gemäß der Idee der vorliegenden Erfindung, erfolgt die Anpassung der Gleitplattenformation wie in den Figuren 6a, 6b, 6c und 6d gezeigt. Mit der vorgeschlagenen Methode lässt sich ein Spiel zwischen 0,01 und 0,03 mm einstellen.

Das Einstellen des Führungsspiels zwischen den Seitengleitplatten 10, 30 und der Mittenführung 20 erfolgt dabei mit den folgenden Schritten:
a. Herstellen der Mittenführung 20 nach einem Passmaß;
b. Ermitteln der erforderlichen Gleitleistenhöhe der Gleitleisten im Bereich der Abschnitte G;
c. Ermitteln des erforderlichen Spaltmaßes zwischen der Gleitleisten 10, 30 zur Mittenführung 20;
d. Einschleifen der Gleitleisten 10, 30 (und zwar im Bereich G d. h. die Flächen 14, 34) vorzugsweise durch Umfangsschleifen zum Herstellen der erforderlichen Gleitleistenhöhe und
e. Einschleifen wenigstens einer der Mittenführung zugewandten Seitenflächen 16, 36 vorzugsweise durch Umfangsschleifen bei einer der beiden Gleitleisten 10, 30.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So können die Seitengleitplatten 10, 30 an wenigstens drei Seitenflächen mit einer Verschleißschicht, vorzugsweise als Festschmierstoffflächen oder als Sinterbeschichtung ausgebildet sein.

## Patentansprüche

1. Keiltrieb (1) ausgebildet zur Umlenkung einer vertikalen Pressenkraft in eine horizontale, lineare Arbeitsbewegung, mit einem Schieberelement (2) und einer Schieberelementaufnahme (3), welche zwei Führungselemente (2, 3) darstellen, an denen eine Führungseinrichtung mit einer Gleitplattenanordnung (10, 20, 30) mit zwei Seitengleitplatten (10, 30) und einer Mittenführung (20) angeordnet ist, wobei die Seitengleitplatten (10, 30) in einer Querrichtung (Y), die senkrecht auf der Gleitrichtung (X) steht, zueinander beabstandet sind, wobei die Mittenführung (20) zwischen den beiden Seitengleitplatten (10, 20) angeordnet und an dem Schieberelement (2) befestigt ist, wobei die beiden Seitengleitplatten (10, 30) mit wenigstens einer Schulter (11, 31) ausgebildet sind, die an einer korrespondierenden Stufe (3a, 3b) ausgebildet am Führungselement (3) mit Formschluss anliegen, wobei der Formschluss in bzw. entgegen der definierten Querrichtung (Y) wirkt, so dass Querkräfte abgefangen werden und jede Seitengleitplatte (10, 30) mit wenigstens den folgenden Anlageflächen (12, 13, 34 bzw. 32, 33, 34) an der Schieberelementaufnahme (3) anliegt:
a. je eine Anlagefläche (12, 32) liegt auf einer zu dem Schieberelement (2) beabstandeten ersten Ebene (E1) und verläuft in Querrichtung (Y) und
b. eine zweite Anlagefläche (14, 34) liegt auf einer zu der ersten Ebene (E1) und zu dem Schieberelement (2) weiter als die erste Ebene (E1) beabstandeten zweiten Ebene (E2) und verläuft ebenfalls in Querrichtung (Y) und
c. eine dritte Anlagefläche (13 bzw. 33) verläuft senkrecht dazu, wobei die jeweilige Seitengleitplatte (10, 30) mittels Befestigungsmitteln (5) an der Schieberelementaufnahme (3) befestigt sind, **dadurch gekennzeichnet, dass** die Befestigungsmitteln (5) im Bereich innerhalb der jeweils ersten Anlagefläche (12, 32) angeordnet sind.

2. Keiltrieb (1) nach Anspruch 1, wobei eine Seitenfläche (16 bzw. 36) jeder Seitengleitplatte jeweils senkrecht oder schräg zu der Ebene (E1) verläuft und jeweils der Anlagefläche (21) der Mittenführung (20) vorzugsweise unter Bildung eines Spaltes gegenüber liegt.

3. Keiltrieb (1) nach Anspruch 1 oder 2, wobei die jeweilige Seitengleitplatte (10, 30) mittels Befestigungsmitteln (5) an der Schieberelementaufnahme (3) befestigt sind und die Befestigungsmitteln (5) im Bereich innerhalb der Anlagefläche (12, 32) angeordnet sind.

4. Keiltrieb (1) nach Anspruch 1, 2 oder 3, wobei sich an die Schulter (11, 31) jeweils ein Gleitplattenabschnitt (G) mit einer Fläche (14, 34) anschließt.

5. Keiltrieb (1) nach Anspruch 1, **dadurch gekennzeichnet, dass** im Bereich der zweiten Anlageflächen (14, 34) der jeweiligen Seitengleitplatte (10, 30) bestimmungsgemäß keine Befestigungsmitteln (5) zur Befestigung der Seitengleitplatte (10, 30) an der Schieberelementaufnahme (3) angeordnet oder vorgesehen sind.

6. Keiltrieb (1) nach einem der vorhergehenden Ansprüche, **dadurch gekennzeichnet, dass** die Anlagefläche (12, 32) in der Ebene (E1) in Querrichtung (Y) betrachtet größer ausgebildet ist im Vergleich zur zweiten Anlagefläche (14, 34) im Bereich (G), vorzugsweise etwa 1,3 bis 1,8 mal so groß.

7. Keiltrieb (1) nach einem der vorhergehenden Ansprüche, **dadurch gekennzeichnet, dass** sich die Anlagefläche (12, 32) jeweils von der Außenkante (A) der Seitengleitplatte (10, 30) bis zur senkrecht verlaufenden dritten Anlagefläche (13 bzw. 33) erstreckt.

8. Keiltrieb (1) nach einem der vorhergehenden Ansprüche, **dadurch gekennzeichnet, dass** sich die Anlagefläche (12, 32) jeweils von der Außenkante (A) der Seitengleitplatte (10, 30) bis zur schräg oder quer dazu verlaufenden dritten Anlagefläche (13 bzw. 33) erstreckt.

9. Keiltrieb (1) nach einem der vorhergehenden Ansprüche, **dadurch gekennzeichnet, dass** für die seitliche Lagerung jeder Seitengleitplatte (10, 30) entweder eine weitere Stufe (3a, 3b) an der Schieberelementaufnahme (3) oder eine weitere Schulter (11, 31) an der Seitengleitplatte vorgesehen ist, mit der ein Formschluss mit der Schieberelementaufnahme (3) erfolgt.

10. Keiltrieb (1) nach einem der vorhergehenden Ansprüche, **dadurch gekennzeichnet, dass** die Seitengleitplatten (10, 30) an wenigstens drei Seitenflächen mit einer Verschleißschicht, vorzugsweise als Festschmierstoffflächen oder als Sinterbeschichtung ausgebildet sind.

11. Verfahren zum Einstellen des Führungsspiels zwischen den Seitengleitplatten (10, 30) und der Mittenführung (20) bei der Herstellung oder Montage eines Keiltriebs (1) gemäß einem der vorhergehenden Ansprüche mit den folgenden Schritten:
a. Herstellen der Mittenführung (20) nach einem Passmaß;
b. Ermitteln der erforderlichen Gleitleistenhöhe der Gleitleisten im Bereich der Abschnitte (G);
c. Ermitteln des erforderlichen Spaltmaßes zwischen der Gleitleisten (10, 30) zur Mittenführung (20);
d. Einschleifen der Gleitleisten (10, 30) zum Herstellen der erforderlichen Gleitleistenhöhe im Bereich der Abschnitte (G) und zwar der zweiten Anlageflächen (14, 34) vorzugsweise durch Umfangsschleifen;
e. Einschleifen wenigstens einer der Mittenführung zugewandten Seitenflächen (16, 36) vorzugsweise durch Umfangsschleifen bei einer der beiden Gleitleisten (10, 30).

## Claims

1. A wedge drive (1) designed to redirect a vertical pressing force into a horizontal, linear working motion, comprising a sliding element (2) and a sliding element holder (3) which are two guide elements (2, 3) on which a guide device with a sliding plate assembly (10, 20, 30) with two side sliding plates (10, 30) and a central guide (20) is arranged, wherein the side sliding plates (10, 30) are at a distance from one another in the transverse direction (Y) which is perpendicular to the sliding direction (X), wherein the center guide (20) is arranged between the two side sliding plates (10, 20) and is fastened on the sliding element (2), wherein the two side sliding plates (10, 30) are constructed with at least one shoulder (11, 31) which rest(s) with an interlocking connection on a corresponding step (3a, 3b) formed on the guide element (3), wherein the interlocking connection acts in or against the defined transverse direction (Y) so that transverse forces are caught and each side sliding plate (10, 30) rests with at least the following contact surfaces (12, 13, 14 and 32, 33, 34, respectively) on the sliding element holder (3):
a. One contact surface (12, 32) of each lies on a first plane (E1) at a distance from the sliding element (2) and runs in the transverse direction (Y), and
b. A second contact surface (14, 34) lies on a second plane (E2) at a distance from the first plane (E1) and the sliding element (2) further than the first plane (E1) and also runs in the transverse direction (Y), and
c. A third contact surface (13 and 33, respectively) runs perpendicularly to the latter, wherein
the particular side sliding plates (10, 30) are fastened by fastening means (5) to the sliding element holder (3), **characterized in that** the fastening means (5) are arranged in the area inside the particular first contact surface (12, 32).

2. The wedge drive (1) according to Claim 1, wherein a side surface (16 and 36) of each side sliding plate runs perpendicularly or obliquely to the plane (E1) and is opposite the contact surface (21) of the central guide (20).

3. The wedge drive (1) according to Claim 1 or 2, wherein the particular side sliding plates (10, 30) are fastened by fastening means (5) to the sliding element holder (3) and the fastening means (5) are arranged in the area inside the contact surface (12, 32).

4. The wedge drive (1) according to Claim 1, 2 or 3, wherein a sliding plate section (G) with a surface (14, 34) follows each of the shoulders (11, 31).

5. The wedge drive (1) according to Claim 1, **characterized in that** normally no fastening means (5) for fastening the side sliding plates (10, 30) to the sliding element holder (3) are arranged or provided in the area of the second contact surfaces (14, 34) of the particular side sliding plates (10, 30).

6. The wedge drive (1) according to one of the previous claims, **characterized in that** the contact surfaces (12, 32), viewed in the plane (E1) in the transverse direction (Y), are constructed to be larger in comparison to the second contact surfaces (14, 34) in the area (G), preferably about 1.3 to 1.8 times as large.

7. The wedge drive (1) according to one of the previous claims, **characterized in that** the contact surfaces (12, 32) each extend from the outer edge (A) of the side sliding plates (10, 30) to the perpendicularly running third contact surfaces (13 and 33).

8. The wedge drive (1) according to one of the previous claims, **characterized in that** the contact surfaces (12, 32) each extend from the outer edge (A) of the side sliding plates (10, 30) to the third contact surfaces (13 and 33) running obliquely or transversely to them.

9. The wedge drive (1) according to one of the previous claims, **characterized in that** for the lateral support of each side sliding plate (10, 30), either another step (3a, 3b) is provided on the sliding element holder (3) or another shoulder (11, 31) is provided on the side sliding plate with which an interlocking connection to the sliding element holder (3) takes place.

10. The wedge drive (1) according to one of the previous claims, **characterized in that** the side sliding plates (10, 30) are constructed at at least three side surfaces with an antiwear layer, preferably as fixed lubricant surfaces or as a sintered coating.

11. A method for adjusting the guide play between the side sliding plates (10, 30) and the central guide (20) in the production or assembly of a wedge drive (1) according to one of the previous claims with the following steps:
a. Production of the center guide (20) after a tolerance on fit;
b. Determining the required sliding strip height of the sliding strips in the area of the sections (G);
c. Determining the required slot measure between the sliding strips (10, 30) to the central guide (20);
d. Grinding the sliding strips (10, 30) for producing the required sliding strip height in the area of the sections (G), namely the second contact surfaces (14, 34), preferably by circumferential grinding; and
e. Grinding at least one of the side surfaces (16, 36) facing the central guide, preferably by circumferential grinding at one of the two sliding strips (10, 30).

## Revendications

1. Transmission par courroie trapézoïdale (1) réalisée pour dévier une force de pression verticale en un mouvement de travail linéaire, horizontal, avec un élément coulissant (2) et un logement d'élément coulissant (3), lesquels constituent deux éléments de guidage (2, 3), sur lesquels est disposé un dispositif de guidage avec un agencement de plaques coulissantes (10, 20, 30) avec deux plaques coulissantes latérales (10, 30) et un guidage central (20), dans laquelle les plaques coulissantes latérales (10, 30) sont espacées l'une de l'autre dans une direction transversale (Y), qui est perpendiculaire à la direction de coulissement (X), dans laquelle le guidage central (20) est disposé entre les deux plaques coulissantes latérales (10, 20) et fixé à l'élément coulissant (2), dans laquelle les deux plaques coulissantes latérales (10, 30) sont réalisées avec au moins un épaulement (11, 31), qui s'applique contre un gradin (3a, 3b) correspondant réalisé sur l'élément de guidage (3) avec complémentarité de forme, dans laquelle la complémentarité de forme agit dans ou à l'encontre de la direction transversale (Y) définie, de sorte que les forces transversales sont absorbées et chaque plaque coulissante latérale (10, 30) s'applique contre le logement d'élément coulissant (3) avec au moins les surfaces d'appui (12, 13, 34 ou 32, 33, 34) suivantes :
a. une surface d'appui (12, 32) se situe respectivement sur un premier plan (E1) espacé de l'élément coulissant (2), et s'étend dans la direction transversale (Y) et
b. une deuxième surface d'appui (14, 34) se situe sur un deuxième plan (E2) espacé du premier plan (E1) et plus espacé de l'élément coulissant (2) que le premier plan (E1) et s'étend également dans la direction transversale (Y) et
c. une troisième surface d'appui (13 ou 33) s'étend perpendiculairement à celle-ci, dans laquelle la plaque coulissante latérale (10, 30) respective est fixée au logement d'élément coulissant (3) à l'aide des moyens de fixation (5), **caractérisée en ce que** les moyens de fixation (5) sont disposés dans la zone située à l'intérieur de la première surface d'appui (12, 32) respective.

2. Transmission par courroie trapézoïdale (1) selon la revendication 1, dans laquelle une surface latérale (16 ou 36) de chaque plaque coulissante latérale s'étend perpendiculairement ou obliquement au plan (E1) et est opposée respectivement à la surface d'appui (21) du guidage central (20), de préférence avec formation d'un espace.

3. Transmission par courroie trapézoïdale (1) selon la revendication 1 ou 2, dans laquelle la plaque coulissante latérale (10, 30) respective est fixée au logement d'élément coulissant (3) à l'aide de moyens de fixation (5) et les moyens de fixation (5) sont disposés dans la zone à l'intérieur de la surface d'appui (12, 32).

4. Transmission par courroie trapézoïdale (1) selon la revendication 1, 2 ou 3, dans laquelle respectivement une section de plaque coulissante (G) se raccorde à l'épaulement (11, 31) avec une surface (14, 34).

5. Transmission par courroie trapézoïdale (1) selon la revendication 1, **caractérisée en ce que** dans la zone des deuxièmes surfaces d'appui (14, 34) de la plaque coulissante latérale (10, 30) respective, conformément à l'usage prévu, aucun moyen de fixation (5) pour la fixation de la plaque coulissante latérale (10, 30) au logement d'élément coulissant (3) n'est disposé ou prévu.

6. Transmission par courroie trapézoïdale (1) selon l'une quelconque des revendications précédentes, **caractérisée en ce que** la surface d'appui (12, 32) dans le plan (E1), vue dans la direction transversale (Y), est réalisée de manière plus grande que la deuxième surface d'appui (14, 34) dans la zone (G), de préférence d'environ 1,3 à 1,8 fois plus grande.

7. Transmission par courroie trapézoïdale (1) selon l'une quelconque des revendications précédentes, **caractérisée en ce que** la surface d'appui (12, 32) s'étend respectivement du bord extérieur (A) de la plaque coulissante latérale (10, 30) jusqu'à la troisième surface d'appui (13 ou 33) s'étendant perpendiculairement.

8. Transmission par courroie trapézoïdale (1) selon l'une quelconque des revendications précédentes, **caractérisée en ce que** la surface d'appui (12, 32) s'étend respectivement du bord extérieur (A) de la plaque coulissante latérale (10, 30) jusqu'à la troisième surface d'appui (13 ou 33) s'étendant obliquement ou transversalement par rapport à celle-ci.

9. Transmission par courroie trapézoïdale (1) selon l'une quelconque des revendications précédentes, **caractérisée en ce que** pour le stockage latéral de chaque plaque coulissante latérale (10, 30), soit un autre gradin (3a, 3b) sur le logement d'élément coulissant (3) soit un autre épaulement (11, 31) sur la plaque coulissante latérale est prévu, avec laquelle une complémentarité de forme avec le logement d'élément coulissant (3) s'effectue.

10. Transmission par courroie trapézoïdale (1) selon l'une quelconque des revendications précédentes, **caractérisée en ce que** les plaques coulissantes latérales (10, 30) sont réalisées sur au moins trois faces latérales avec une couche d'usure, de préférence sous forme de surfaces lubrifiantes solides ou sous forme de revêtement fritté.

11. Procédé pour régler le jeu de guidage entre les plaques coulissantes latérales (10, 30) et le guidage central (20) lors de la production ou du montage d'une transmission par courroie trapézoïdale (1) selon l'une quelconque des revendications précédentes, avec les étapes suivantes :
a. la production du guidage central (20) selon des cotes ;
b. la détermination de la hauteur de bandes coulissantes requise des bandes coulissantes dans la zone des sections (G) ;
c. la détermination de la dimension de l'espace requise entre les bandes coulissantes (10, 30) et le guidage central (20) ;
d. le meulage des bandes coulissantes (10, 30) pour produire la hauteur de bandes coulissantes requise dans la zone des sections (G), à savoir les deuxièmes surfaces d'appui (14, 34), de préférence par meulage circonférentiel ;
e. le meulage d'au moins une surface latérale (16, 36) tournée vers le guidage central, de préférence par meulage circonférentiel pour l'une des deux bandes coulissantes (10, 30).
